# EUROPÄISCHE PATENTSCHRIFT

(11) **EP 1 478 898 B1**
(45) Veröffentlichungstag und Bekanntmachung des Hinweises auf die Patenterteilung: **05.07.2006**
(21) Anmeldenummer: 03711865.0
(22) Anmeldetag: 18.01.2003
(51) Int. Cl.: G01B 5/008, G01B 5/012

(54) **TASTKOPF FÜR KOORDINATEN-MESSGERÄTE**
PROBING HEAD FOR CO-ORDINATE MEASURING DEVICES
SONDE POUR APPAREIL DE MESURE A COORDONNEES

(30) Priorität: 28.02.2002 DE 10209775; 15.07.2002 DE 10232349
(43) Veröffentlichungstag der Anmeldung: 24.11.2004
(73) Patentinhaber: Carl Zeiss Industrielle Messtechnik GmbH, 73447 Oberkochen (DE)
(72) Erfinder: ENDERLE, Eckhard, 73434 Aalen (DE); BRENNER, Kurt, 74589 Satteldorf (DE)
(74) Vertreter: Duhme, Torsten
(86) Internationale Anmeldenummer: PCT/EP2003/000472
(87) Internationale Veröffentlichungsnummer: WO 2003/073038

(56) Entgegenhaltungen:
- WO-A-00/08414
- US-A- 3 766 653
- US-A- 4 509 263

## Beschreibung

Die Erfindung betrifft einen Tastkopf für ein Mehrkoordinaten-Messgerät mit einem im Raum auslenkbaren Messtaster und mit Tariermitteln zum Einstellen einer vorbestimmten Ruhelage des Messtasters bei unterschiedlicher Ausrichtung des Tastkopfes im Raum.

Ein Tastkopf der vorstehend genannten Art ist aus der DE 37 25 207 A1 bekannt.

Tastköpfe der hier interessierenden Art werden in Mehrkoordinaten-Messgeräten eingesetzt, um dreidimensional gekrümmte Werkstückoberflächen kontinuierlich abzutasten. Man unterscheidet dabei zwischen zwei Bauarten, nämlich einerseits Tastköpfen mit aktiver Messkraftaufschaltung sowie passiven Tastköpfen.

Bei Tastköpfen mit aktiver Messkraftaufschaltung wird die Messkräft mittels Kraftgeneratoren aktiv über die sogenannte Tastkopfkinematik, d.h. die zum Verfahren entlang von drei Achsen eines kartesischen Koordinatensystems eingesetzten Lineareinheiten, aufgebracht. Die Messkraft ist dabei die Kraft, mit der eine am freien Ende des Messtasters angeordnete Tastkugel an das zu vermessende Werkstück gepresst wird. Die Kraft wird dabei z.B. auf elektromagnetischem Wege über entsprechende Messkraftspulen aufgebracht.

Während des Messvorganges wird in dem Mehrkoordinaten-Messgerät eine Nachführung derart vorgenommen, dass sich die Tastkopfkinematik annähernd in einer Nulllage befindet.

Mit derartigen aktiven Tastköpfen können sehr kleine Messkräfte aufgebracht werden. Beim Beschleunigen des Mehrkoordinaten-Messgerätes kann die Masse der Tastkopfkinematik aktiv mit den Kraftgeneratoren gehalten werden. Zum anderen können solche aktiven Tastköpfe vor dem Antasten der Werkstückoberfläche vorausgelenkt werden. Dadurch gewinnt man einen größeren Reaktionsweg für das Mehrkoordinaten-Messgerät, und man kann dadurch mit größeren Geschwindigkeiten antasten.

Aktive Tastköpfe besitzen meistens auch eine aktive Tarierung, mit der die Tastkopfkinematik beim Schwenken oder Drehen des Tastkopfes wieder in die Nulllage zurückgesetzt werden kann, sich also in einem stabilen Gleichgewicht befindet. Durch eine solche Tarierung geht kein Messweg beim Schwenken verloren.

Bei passiven Tastköpfen hingegen wird die Größe der Messkräfte über die Federsteifigkeit und die Auslenkung der Tastkopfkinematik erzeugt bzw. eingestellt. Um auch kleine Messkräfte realisieren zu können, muss entweder die Tastkopfkinematik weich oder müssen die Auslenkwege gering sein. Kleine Auslenkwege stellen aber große Anforderungen an die Steuerung des Mehrkoordinaten-Messgeräts und erlauben keine großen Antastgeschwindigkeiten. Große Auslenkwege sind also von Vorteil, erfordern aber weiche Federkinematiken, damit die Messkräfte und deren Schwankung nicht zu groß werden.

Um die Messbereichsverluste möglichst gering zu halten, muss die bewegte Masse der Kinematik gering und die Steifigkeit groß sein. Dies widerspricht aber den oben angeführten Forderungen.

Im Rahmen der vorliegenden Erfindung sind in erster Linie passive Tastköpfe angesprochen.

Die meisten bekannten Tastköpfe verfügen über keine Tarierung. Werden solche Tastköpfe also in eine bestimmte Position oder Lage verschwenkt oder verdreht, so wird auch ihre Kinematik aus ihrer stabilen Nulllage ausgelenkt. Damit verringert sich der aktive Messweg um den Betrag der Auslenkung.

Aus der WO 00/08414 ist z.B. ein passiver Tastkopf für dreidimensionale Messungen an Oberflächen bekannt. Bei diesem bekannten Tastkopf ist ein Taststift in einem rückwärtigen Bereich kugelförmig ausgebildet, wobei der kugelförmige Bereich in einem komplementär ballig ausgebildeten Ringlager gehalten ist. Auf diese Weise kann der Taststift entlang von zwei zueinander senkrecht stehenden Achsen eines kartesischen Koordinatensystems bewegt werden, in der dritten, dazu senkrecht stehenden Achse jedoch nicht. Um auch diese Bewegung entlang der dritten Achse zu ermöglichen, ist das Ringlager mit einem Arm verbunden, der über eine sich entlang der dritten Achse erstreckende Feder mit dem Gehäuse verbunden ist.

Zwischen dem Arm und dem rückwärtigen Ende des kugelgelagerten Taststifts sind zwei Sensoren vorgesehen, mit denen eine Kippbewegung des Taststifts entlang von zwei der drei Achsen erfasst werden kann. Zwischen dem Arm und dem Gehäuse ist ein dritter Sensor vorgesehen, um die Bewegung des Arms, und damit auch des Taststifts, entlang der dritten Achse zu erfassen.

Der bekannte Tastkopf ist in der offenbarten Konfiguration nur für eine Einbaulage geeignet, in der das Gehäuse feststeht, wobei lediglich eine Schwenkbewegung des Taststifts im Kugellager sowie eine Vertikalbewegung des Arms möglich ist. Bei Verschwenkung des gesamten Tastkopfs würde die Anordnung hingegen aus dem Gegengewicht geraten, da sie nicht austariert ist. So würden bereits Messfehler auftreten, wenn die vertikale Führungsfläche für den Arm geneigt würde, weil dann die Feder anders belastet wäre als bei vertikaler Einbaurichtung.

Auch der in dem Kugellager gelagerte Taststift wird bei einer Auslenkung aus der Vertikallage Rückstellkräften ausgesetzt, weil der Taststift relativ zum Zentrum des Kugellagers asymmetrisch ausgebildet ist.

Aus der DE 24 40 692 B1 ist ein Drei-Koordinaten-Wegaufnehmer bekannt. Dieser Aufnehmer enthält einen Taststift, der in der Mitte einer Membranfeder befestigt ist und von dieser auf einer Seite mit einem Messbolzen und auf der anderen Seite mit einer Sensorik absteht. Die Membranfeder ist an ihrem Umfang in einem rohrförmigen Gehäuse gehalten. Die Membranfeder gestattet dabei Bewegungen des Messbolzens in allen drei Koordinatenrichtungen, also auch in Axialrichtung. Die Sensorik besteht aus drei Ferritkernen, die entlang von drei Achsen eines kartesischen Koordinatensystems angeordnet und jeweils von einem Spulensystem umgeben sind. Bei Auslenkung einer Tastkugel am freien Ende des Messbolzens werden daher die Ferritkerne in unterschiedlicher Weise in ihren Spulensystemen bewegt, so dass drei Messsignale erzeugt werden, die der Bewegung der Tastkugel in drei Koordinatenrichtungen entsprechen.

Auch dieser bekannte Tastkopf ist nicht austariert, so dass eine Änderung der Einbau- oder Betriebslage des Tastkopfes zu Messfehlern bzw. zu einer Auslenkung führt.

Aus der eingangs genannten DE 37 25 207 A1 ist ein Tastkopf für Koordinaten-Messgeräte bekannt. Um diesen Tastkopf völlig lageunabhängig einsetzen zu können, ist für jede der drei Raumachsen eine Tariereinrichtung zuschaltbar, die aus zwei Federn besteht, deren Federkraft mittels eines Motors eingestellt wird. Der Motor wird seinerseits über einen Nulllagen-Indikator gesteuert, der Teil eines Wegmesssystems ist und vorzugsweise optoelektronisch ausgebildet ist.

Dieser bekannte Tastkopf ist daher relativ aufwendig, weil er neben einer Doppelfederanordnung für jede der Raumkoordinaten noch eine jeweils individuelle motorische Verstellung mit zuge= höriger Regelanordnung erfordert.

Aus der DE 195 00 451 A1 ist ein weiterer Tastkopf für Koordinaten-Messgeräte bekannt, bei dem ebenfalls eine Tarierung mittels motorischer Tarierantriebe vorgesehen ist. Der bekannte Tastkopf weist Getriebemotoren auf, die als Stellantriebe für die Tarierung des Tastkopfs, d.h. die Mittellage einer Tastkugel, dienen. Für jeden der drei Freiheitsgrade ist ein entsprechender Antrieb vorgesehen.

Damit ist auch diese Anordnung relativ kompliziert und vor allem mit hohem Gewicht versehen, weil die genannten Antriebe ein erhebliches Eigengewicht aufweisen.

Schließlich offenbart die DE 196 47 514 C2 noch ein Verfahren zur Durchführung einer Messung mit einem Taster eines messenden Tastkopfes eines Koordinaten-Messgerätes. Auch bei diesem bekannten Verfahren ist eine Tarierung entlang von drei Raumkoordinaten vorgesehen, um den Taster in beliebiger Weise im Raum verschwenken zu können. Nach dem beschriebenen Verfahren werden die Verschiebungen der Nulllage des Tasters aufgrund verschiedener Tastergewichte und verschiedener räumlicher Lagen des Tastkopfes ermittelt, und die mit dem Tastkopf bestimmten Messwerte werden schließlich durch elektronische Signalverarbeitung korrigiert.

Im Gegensatz zu den beiden vorher erwähnten bekannten Tastköpfen mit elektromotorischer Tarierung verwendet also dieses bekannte Verfahren eine elektronische Tarierung in Form einer Signalkorrektur.

Das bekannte Verfahren ist damit ebenfalls relativ aufwendig, da für die Abweichungen aus der Nulllage genaue Sensorsysteme vorgesehen werden müssen, die mit einer entsprechend komplizierten Datenverarbeitung zusammenarbeiten.

Der Erfindung liegt demgegenüber die Aufgabe zugrunde, einen Tastkopf der eingangs genannten Art dahingehend weiterzubilden, dass die obengenannten Nachteile vermieden werden. Insbesondere soll ein Tastkopf zur Verfügung gestellt werden, der in jeder Hinsicht tariert ist, so dass der Tastkopf mit hoher Präzision in jeder Einbau- und Betriebslage einsetzbar ist.

Diese Aufgabe wird erfindungsgemäß gelöst, durch einen Tastkopf für ein Mehrkoordinaten-Messgerät mit einem im Raum auslenkbaren Messtaster, der zur Auslenkung entlang von zwei von drei Achsen kardanisch gelagert ist, wobei ferner eine Feder für eine Auslenkung entlang der dritten Achse vorgesehen ist, und mit als Massen ausgebildeten Tariermitteln, die den Messtaster bei unterschiedlicher Ausrichtung des Tastkopfes im Raum in einer vorbestimmten Ruhelage halten, dadurch gekennzeichnet, dass die Tariermittel ein Gegengewicht aufweisen, das sich zwangsweise gegenläufig zu den durch die Feder abgestützten Massen bewegt.

Die der Erfindung zugrunde liegende Aufgabe wird auf diese Weise vollkommen gelöst.

Erfindungsgemäß verwendet man somit zum Tarieren ausschließlich Massenkräfte, d.h. Kräfte, die von systemeigenen Massen oder speziell vorgesehenen Tariermassen erzeugt werden. Durch geschickte Auslegung lässt sich dann eine vollautomatische Selbsttarierung erreichen, die keinerlei elektromotorischer Stellantriebe, keinerlei Sensorik und keinerlei Datenverarbeitung bedarf. Die Erfindung stellt damit ein sehr einfaches, gleichwohl aber sehr wirksames Mittel zur Verfügung, das mit geringen Kosten in der Praxis einsetzbar ist.

Bei der Erfindung wird die Tarierung durch eine vorbestimmte räumliche Bewegung der Massen bewirkt, in dem Einzelmassen durch eine AnEinzelmassen durch eine Anordnung miteinander verbunden sind, die beim Verschwenken des Tastkopfes im Raum eine gegenläufige Bewegung der Einzelmassen bewirken.

Diese Maßnahmen haben den Vorteil, dass durch gezielte gegenläufige Bewegung von Einzelmassen die Schwerpunktslage des Messtasters im Raum festgehalten wird, so dass eine vollkommene Tarierung stattfindet.

Bei einer ersten Gruppe von Ausführungsbeispielen des erfindungsgemäßen Tastkopfes wird die Tarierung durch eine vorbestimmte räumliche Verteilung der Massen bewirkt..

Dies gilt insbesondere dann, wenn der Messtaster in seinem Massenschwerpunkt kardanisch gelagert ist.

Diese Maßnahme hat den Vorteil, dass der Messtaster unabhängig von der Orientierung des Tastkopfes im Raum in seiner einmal eingenommenen Ruhelage verharrt, da sich die durch die Einzelmassen des Messtasters über deren Gewichtskräfte ausgeübten Momente gerade kompensieren.

Dies wird bei einer bevorzugten Ausführungsform der Erfindung dadurch praktisch realisiert, dass der Messtaster ein Gehäuse aufweist, dass in dem Gehäuse ein in einer Spitze auslaufender Messstift angeordnet ist, dass der Messstift gegenüber dem -Gehäuse über eine Feder abgestützt ist, und dass das Gehäuse kardanisch gelagert ist.

Diese Maßnahme hat den Vorteil, dass die kardanische Aufhängung "von außen" auf ein Gehäuse des Tastkopfs wirkt, während die Federung für die Auslenkung entlang der dritten Achse nur innerhalb des Gehäuses auf den dort befindlichen Messstift, also auf eine wesentlich geringere Masse, einwirkt.

Bei Ausführungsformen der Erfindung ist die Feder als Membranfeder ausgebildet, wie dies an sich bekannt ist.

Ein besonders eleganter Aufbau wird in diesem Falle dadurch erzielt, dass die Membranfeder in einem vorzugsweise topfartigen Abschnitt eines Gehäuses des Messtasters zwischen dem Gehäuse und einem in einer Ruhestellung sich entlang einer Gehäuseachse erstreckenden Messstift angeordnet ist.

Diese Maßnahme hat den Vorteil, dass auch in diesem Fall wieder nur ein Messstift mit relativ geringer Masse zu bewegen ist, der mittig in der elastischen Membran gehalten ist.

Eine besonders gute Wirkung wird in diesem Falle dadurch erzielt, dass zwei Membranfedern im axialen Abschnitt zueinander vorgesehen sind.

Diese Maßnahme hat den Vorteil, dass ein Verkanten des Messstiftes verhindert wird, weil dieser an zwei axial beabstandeten Punkten von den Membranfedern gehalten wird.

Bei einer besonders bevorzugten Ausführungsform der Erfindung ist die Feder zwischen der Spitze und der kardanischen Aufhängung angeordnet.

Diese Maßnahme hat den Vorteil, dass die zu bewegenden Massen besonders klein sind und sich in der Praxis auf die Masse des Messstiftes sowie der Federn beschränken.

Es versteht sich dabei, dass die gezielte Verteilung der Massen einerseits und die gezielte räumliche Bewegung der Massen andererseits, jeweils auch nur für einzelne Koordinatenachsen, Richtungen, Ebenen und dergleichen eingesetzt und auch miteinander kombiniert werden können.

Bei weiteren Ausführungsformen der Erfindung umfassen die Tariermittel einen Hebelmechanismus zum gegenläufigen Bewegen der Massen.

Diese Maßnahme hat den Vorteil, dass die Tariermittel mechanisch einfach aufgebaut werden können und unabhängig von der Einbaulage bzw. Betriebslage des Tastkopfes wirken.

Dies gilt insbesondere dann, wenn der Hebelmechanismus zweiarmige Hebel umfasst.

Wenn in weiterer Ausgestaltung dieses Ausführungsbeispiels mindestens einer der Hebel einen elastischen Bereich aufweist, so können die Hebel optimale Biegelinien annehmen. Dies ermöglicht in weiterer Ausgestaltung der Erfindung die Verwendung von mittig aufliegenden starren Gebilden mit beidendig biegeelastischer Einspannung als Hebel.

Bei einem besonders bevorzugten Ausführungsbeispiel ist der Hebelmechanismus zwischen einem äußeren Gegengewicht und einem in einer Ruhestellung sich entlang einer Mittelachse des Messtasters erstreckenden Messstift angeordnet.

Diese Maßnahme hat den Vorteil, dass ein besonders kompakter Aufbau entsteht. Durch die Anordnung des Gegengewichtes an der Peripherie wird bei verhältnismäßig kleinem Querschnitt ein hohes Gewicht zur Verfügung gestellt.

Weiterhin ist bevorzugt, wenn der Messtaster ein rohrartiges Gehäuse aufweist, das an seiner Oberseite mit einem radialen Flansch versehen ist, wobei zweiarmige Hebel des Hebelmechanismus sich mittig an dem Flansch abstützen.

Auch diese Maßnahme hat den Vorteil, dass sich ein besonders kompakter Aufbau ergibt und die zu kompensierenden Massen optimal verteilt werden können.

Bei weiter bevorzugten Ausführungsformen der Erfindung ist eine mittels des Hebelmechanismus verschwenkte Masse mit einem Zusatzgewicht versehen, wobei das Zusatzgewicht so dimensioniert ist, dass eine infolge des Gewichtes der Masse auftretende Durchbiegung eines diese Masse tragenden Hebelarms und/oder einer den Hebelarm tragenden Lagerstelle kompensiert wird.

Diese Maßnahme hat den Vorteil, dass eine bestimmte Form von Restfehler mit kompensiert wird, nämlich die sogenannte "Tarierablage", die dadurch entsteht, dass in der Praxis zusätzliche Lageveränderungen der Massen entstehen, wenn sich entweder Hebelarme, die zum gezielten Verfahren der Massen eingesetzt werden, infolge der Gewichtskraft dieser Massen verbiegen und/oder Lagerstellen, die in diesem Zusammenhang als tragende Elemente tätig sind, eine gewisse Durchbiegung aufweisen. Die sich durch diese Durchbiegungen einstellenden Lagefehler können in überraschend einfacher Weise dadurch kompensiert werden, dass man die bewegten Massen mit einem gewissen Zusatzgewicht versieht, das über den wirksamen Hebelarm die erforderliche Lagekorrektur vornimmt.

Die beanspruchte Erfindung hat den bereits weiter oben angedeuteten Vorteil, dass das gezielte Verfahren von Massen im Raum zum Tarieren einer Achse eingesetzt wird, während die Tarierung um die beiden anderen Achsen im wesentlichen durch eine geeignete Verteilung der Massen im Raum bewirkt wird.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine extrem schematisierte Darstellung zur Erläuterung des Prinzips eines erfindungsgemäßen Tastkopfes;
- Fig. 2A: eine Prinzipdarstellung eines ersten Ausführungsbeispiels eines erfindungsgemäßen Tastkopfs, in Ruhestellung;
- Fig. 2B: eine Darstellung, ähnlich Fig. 2A, jedoch für den Tastkopf in einer ersten, seitlich ausgelenkten Betriebsstellung;
- Fig. 2C: eine Darstellung ähnlich Fig. 2A und 2B, jedoch für den Tastkopf in einer weiteren, vertikal ausgelenkten Betriebsstellung;
- Fig. 2D: in stark schematisierter Weise eine Darstellung, ähnlich Fig. 2A, für eine alternative kardanische Aufhängung eines Messtasters;
- Fig. 2E: eine Darstellung zur weiteren Erläuterung der Verhältnisse in Fig. 2C, im Hinblick auf eine sogenannte Tarierablage;
- Fig. 3A und 3B: eine perspektivische Darstellung, teilweise aufgebrochen, einer praktischen Realisierung des Messtasters gemäß Fig. 2A, dargestellt in zwei Hälften;
- Fig. 4A: eine Draufsicht auf ein Tarierfedersystem, wie es beim Messtaster gemäß Fig. 3A und 3B Verwendung findet;
- Fig. 4B und 4C: zwei äußerst schematisierte Schnittansichten entlang der Linie IV-IV in Fig. 4A zur Erläuterung der Wirkungsweise eines dort gezeigten Gelenks.

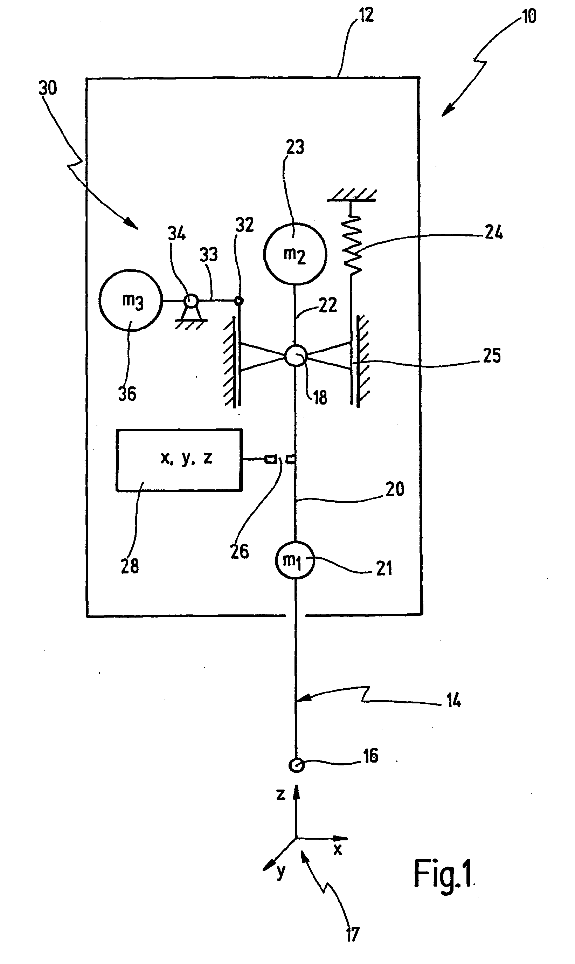

In Fig. 1 bezeichnet 10 insgesamt einen Tastkopf für ein Mehrkoordinaten-Messgerät. Der Tastkopf 10 umfasst ein Gehäuse 12, in dem sich ein Messtaster 14 befindet. Am freien Ende des Messtasters 14 befindet sich eine Spitze 16. Der Messtaster 14 ist so aufgehängt, dass die Spitze 16 sich entlang der drei Achsen x, y und z eines kartesischen Koordinatensystems 17 bewegen kann.

Hierzu ist der Messtaster 14 einerseits in einem Lager 18 aufgehängt. Das Lager 18 ist ein kardanisches Lager, wobei der Begriff "kardanisch" im vorliegenden Zusammenhang so zu verstehen ist, dass die Spitze 16 eine Bewegung in der x-y-Ebene ausüben kann, eine Bewegung in z-Richtung jedoch nicht möglich ist.

Der Messtaster 14 unterteilt sich in einen unteren Abschnitt 20 unterhalb des Lagers 18, dessen Gewicht 21 mit einer Masse m₁ symbolisiert ist, und einen oberen Abschnitt 22 oberhalb des Lagers 18, dessen Gewicht 23 durch eine Masse m₂ charakterisiert ist.

Die Anordnung ist dabei so getroffen, dass sich der Massenschwerpunkt der Massen m₁ und m₂ gerade im Zentrum des Lagers 18 befindet.

Andererseits ist der Messtaster 14 zusammen mit dem Lager 18 in einer Führung 25 geführt, die in z-Richtung orientiert ist. In dieser Richtung wirkt auch eine Feder 24, die das Lager 18 zusammen mit dem gesamten Messtaster 14 gegen Masse, beispielsweise gegen das Gehäuse 12, abstützt. Über die Feder 24 ist daher eine Bewegung des Messtasters 14 auch in z-Richtung möglich.

Mit 26 ist eine Sensorik angedeutet, die mit dem Messtaster 14 zusammenwirkt und dessen Bewegung in x-, y- und z-Richtung erfasst, wie dies dem Fachmann geläufig ist. Die Ausgangssignale der Sensorik 26 werden einer Messelektronik 28 zugeführt, die aus den Signalen der Sensorik 26 entsprechende Signale für eine Weiterverarbeitung der Messwerte bildet.

Schließlich ist in Fig. 1 noch eine Tariervorrichtung 30 dargestellt. Die Tariervorrichtung 30 wirkt in z-Richtung. Sie ist in Fig. 1 durch eine Hebelanordnung symbolisiert, bei der an einem Gelenk 32 ein Hebelarm 33 am Lager 18 angreift und über ein gehäusefestes Lager 34 zu einem Gegengewicht 36 führt, dessen Masse in Fig. 1 mit m₃ bezeichnet ist.

### Der Tastkopf 10 in Fig. 1 arbeitet wie folgt:

Wenn die Spitze 16 an einer dreidimensionalen gekrümmten Oberfläche eines zu vermessenden Werkstücks entlanggeführt wird, kann sie in der x-y-Ebene ausgelenkt werden, weil das kardanische Lager 18 diese Bewegung zulässt. Eine Auslenkung in z-Richtung wird über die Abstützung der Feder 24 ermöglicht.

Eine Auslenkung in der x-y-Ebene hat keine durch Gravitation verursachten Rückstellkräfte im Messtaster 14 zur Folge, weil der Messtaster 14 mit seinem Massenschwerpunkt im Zentrum des Lagers 18 liegt. Der Messtaster 14 befindet sich daher in jeder Schwenklage im Gleichgewicht.

Entsprechendes gilt für eine Auslenkung in z-Richtung, weil eine Vertikalbewegung der Gesamtmasse m₁ + m₂ mittels der als Wippe wirkenden Anordnung 32, 33, 34 durch eine gegenläufige Bewegung der Masse m₃ kompensiert wird, die beispielsweise gleich der Summe m₁ + m₂ sein kann.

Dies gilt auch für den Fall, dass der Tastkopf 10 insgesamt verschwenkt oder gedreht wird, weil beide Stabilisierungssysteme auch in einer schiefen Betriebsstellung des Tastkopfes 10 arbeiten.

Es versteht sich dabei, dass insbesondere die Tariervorrichtung 30 in Fig. 1 nur extrem schematisch dargestellt ist. Im Rahmen der Erfindung sind hier Tariervorrichtungen aller Art angesprochen, die entlang einer oder mehrerer der Koordinatenachsen bzw. bei Verwendung von Polarkoordinaten auch in Richtung der Schwenkwinkel wirken, um eine Tarierung der bewegten Massen in allgemeinster Form zu bewirken. In der Realität lassen sich auch andere als die in Fig. 1 gezeigten Mechanismen verwenden, die eine gegenläufige Bewegung der Massen m₁, m₂ einerseits und m₃ andererseits gestatten, wie nachstehend gezeigt werden wird.

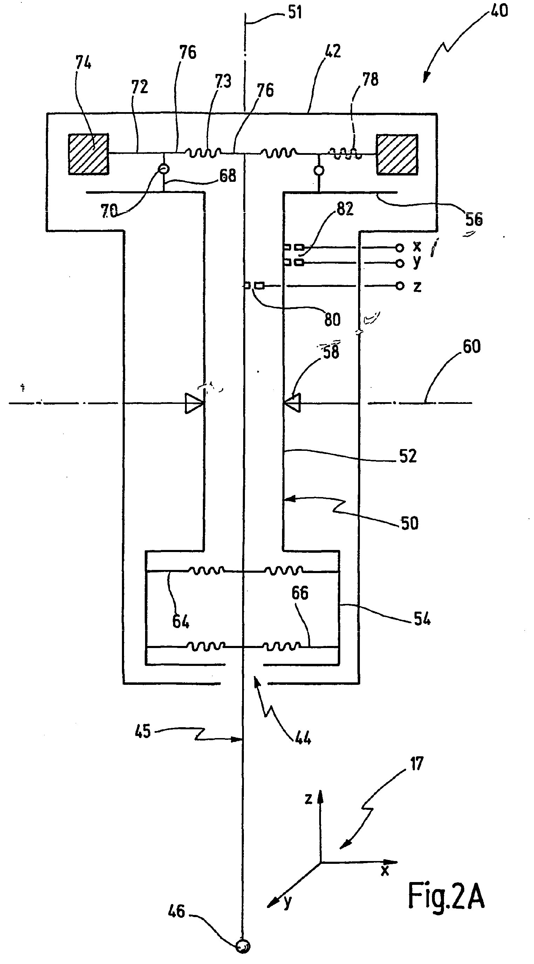

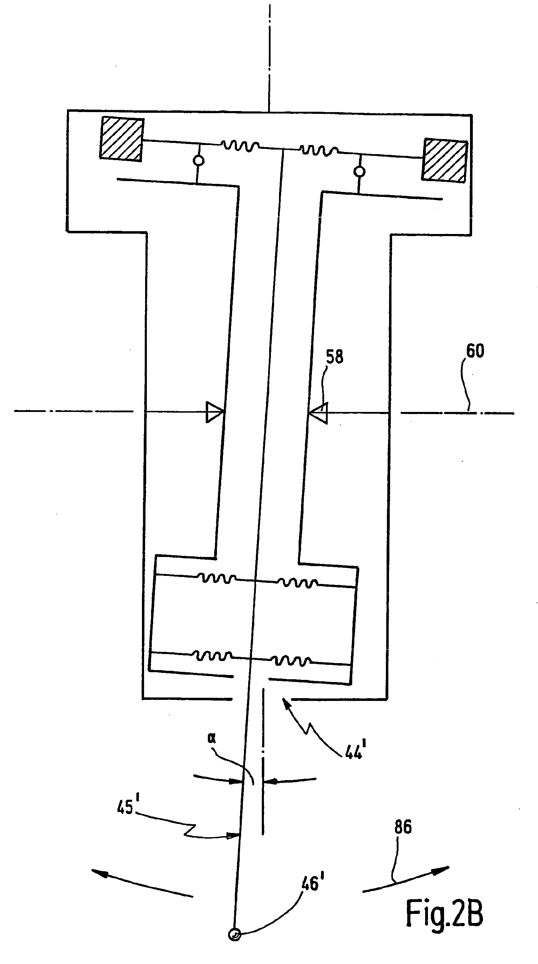

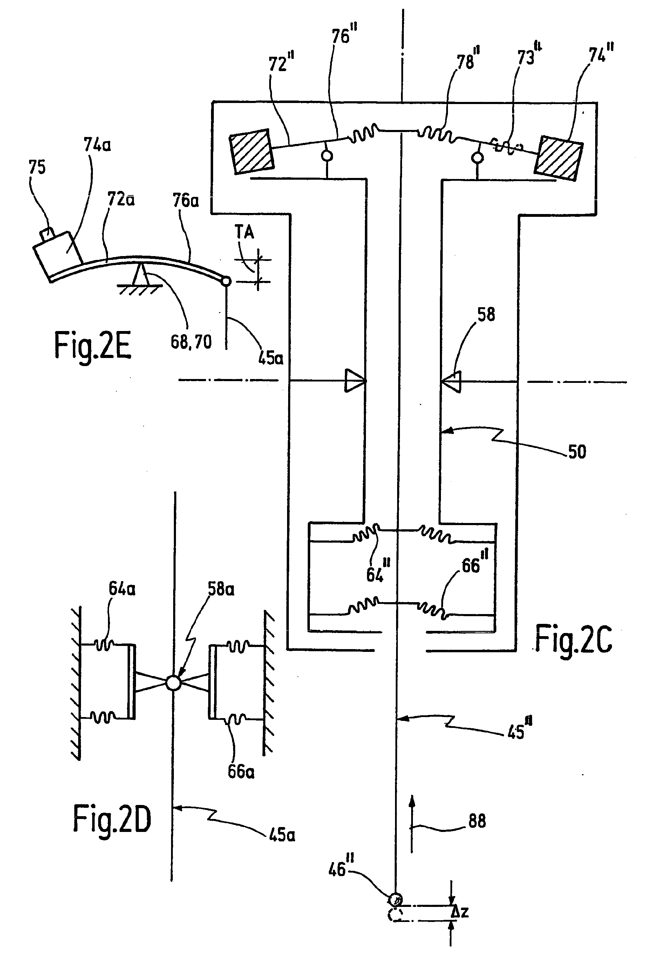

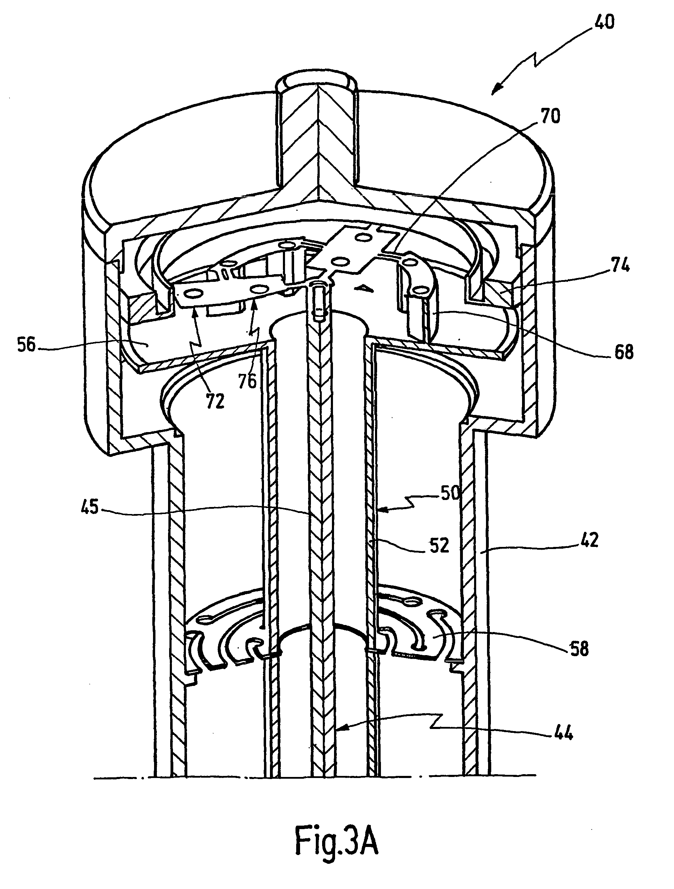

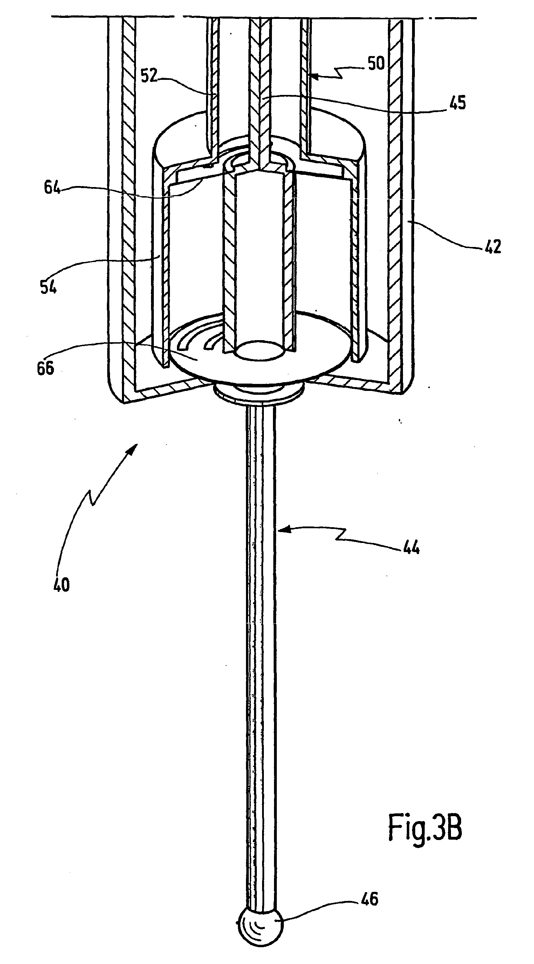

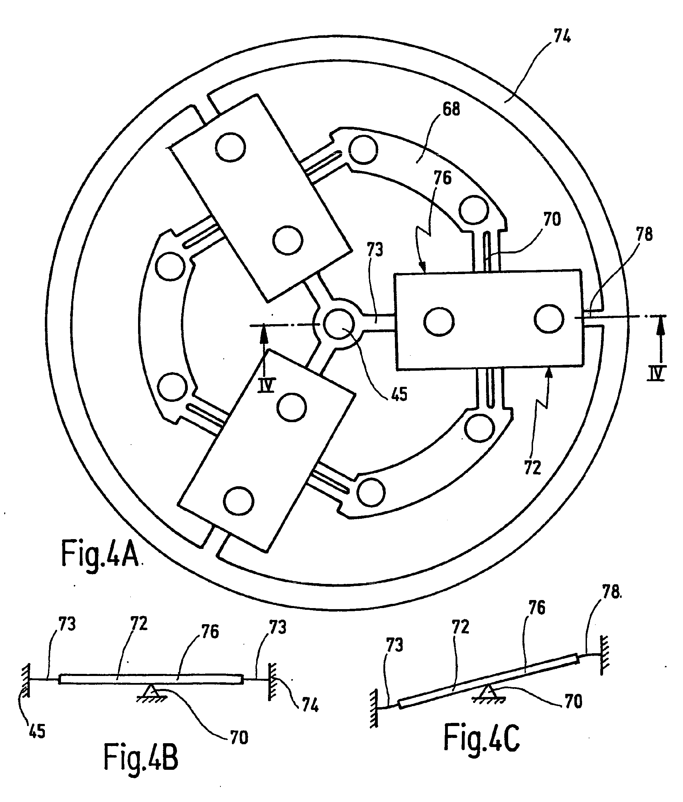

In den Fig. 2A bis 2C ist ein weiteres Ausführungsbeispiel eines erfindungsgemäßen Tastkopfs 40 schematisch sowie in den Fig. 3A und 3B in einer praktischen Ausführungsform dargestellt, wobei Fig. 4 in vergrößertem Maßstab noch ein Detail aus Fig. 3A zeigt. Folglich sind in den Fig. 2 bis 4 gleiche Elemente mit gleichen Bezugszeichen versehen, wobei unterschiedliche Betriebsstellungen jeweils durch Hinzufügen eines Apostrophzeichens oder Doppelapostrophzeichens gekennzeichnet sind.

Insgesamt bezeichnet dabei 40 den Tastkopf, der ein Gehäuse 42 aufweist. In dem Gehäuse 42 sitzt ein Messtaster 44. Der Messtaster 44 ist von im wesentlichen rohrförmiger Gestalt. Entlang einer Mittelachse 51 des Messtasters 44 erstreckt sich ein Messstift 45, dessen untere Spitze 46 als Kugel ausgebildet ist. Auch hier ist eine Bewegung der Spitze 46 entlang der drei Achsen x, y und z eines kartesischen Koordinatensystems 17 möglich.

Der Messtaster 44 ist mit einem rohrförmigen Gehäuse 50 versehen. Dieses Gehäuse 50 enthält einen mittleren Abschnitt 52, einen unteren Gehäuseabschnitt 54 sowie einen oben an den mittleren Abschnitt 52 angesetzten radialen Flansch 56.

Etwa in der Mitte des mittleren, rohrförmigen Abschnitts 52 ist der Messtaster 44 in einem kardanischen Lager 58 relativ zum Gehäuse 42 des Tastkopfes 40 abgestützt. Das kardanische Lager 58 befindet sich in einer Ebene 60, die in etwa eine radiale Mittelebene des Tastkopfes 40 darstellt.

Der Messstift 45 ist im Bereich des Gehäuseabschnitts 54 im Zentrum zweier axial beabstandeter Membranfedern 64 und 66 gehalten, die mit ihrer Peripherie am Gehäuseabschnitt 54 festgelegt sind. Diese Anordnung ermöglicht eine Bewegung des Messstiftes 45 nur entlang der z-Achse.

Auf dem radialen Flansch 56 erstrecken sich nach oben axiale Stützen 68, die auch als Ring oder als Ringsegmente ausgebildet sein können. Diese Stützen 68 tragen an ihrer Oberseite Gelenke 70, an denen zweiarmige Hebel elastisch angelenkt sind.

Von den Gelenken 70 erstrecken sich radial nach außen erste, starre Hebelarme 72, die - vorzugsweise über einen biegeelastischen Bereich 78 - zu einem Gegengewicht 74 führen. Das Gegengewicht 74 ist vorzugsweise als Ring ausgebildet, wie besonders deutlich aus Fig. 3A hervorgeht.

Von den Gelenken 70 führen radial nach innen zweite, starre Hebelarme 76, die - vorzugsweise über biegeelastische Bereiche 73 - zum oberen Ende des Messstiftes 45 führen. Die starren Hebelarme 72 und 76 sind vorzugsweise als eine gemeinsame starre Platte ausgebildet (vgl. Fig. 4A bis 4C).

Schließlich ist mit 80 ein erster Sensor bezeichnet, der die Auslenkung des Messstiftes 45 in der z-Richtung erfasst, während zweite Sensoren 82 die Auslenkung des Rohres 50 in x- und y-Richtung messen.

Der Tastkopf 40 arbeitet wie folgt:

Fig. 2B zeigt eine Situation, in der die Kugel an der Spitze 46' am freien Ende des Messstiftes 45' seitlich verschwenkt wurde, wie mit einem Pfeil 86 angedeutet. Dies hat eine Auslenkung in x- und y-Richtung zur Folge. Der Schwenkwinkel ist dabei mit α bezeichnet.

Infolge der kardanischen Aufhängung im Lager 58 entsteht auch hier eine stabile Lage des verschwenkten Messtasters 44', weil die Anordnung so getroffen ist, dass die Massen des Messtasters 44' zu beiden Seiten der Ebene 60 gleich verteilt sind, sich also der Massenschwerpunkt des Messtasters 44' im Zentrum des kardanischen Lagers 58 befindet.

Fig. 2C zeigt demgegenüber eine andere Betriebsstellung, in der der Messstift 45 " nur in z-Richtung ausgelenkt wurde, wie mit einem Pfeil 88 angedeutet. Die Auslenkung ist dabei in Fig. 2C mit Δz bezeichnet.

Weil das kardanische Lager 58 eine Bewegung des Gehäuses 50 in z-Richtung nicht zulässt, wird die Bewegung des Messstifts 45'' in z-Richtung durch Verformung der Membranfedern 64", 66" ermöglicht. Dies ist in Fig. 2C deutlich zu erkennen.

Zusätzlich wird im Betriebszustand gemäß Fig. 2C die am oberen Ende des Messstiftes 45" vorgesehene Tariervorrichtung wirksam. Es darf auch an dieser Stelle darauf hingewiesen werden, dass die in den Figuren dargestellten Tariervorrichtungen nur beispielhaft und schematisch zu verstehen sind, während sich die vorliegende Erfindung auf Tariervorrichtungen aller Art bezieht, die entlang von Koordinatenrichtungen oder Drehwinkeln wirksam sind.

Der sich nach oben bewegende Messstift 45" drückt nämlich das innere Ende der zweiten Hebelarme 76" nach oben, wodurch das äußere Ende der ersten Hebelarme 72" nach unten verschwenkt wird und damit auch das Gegengewicht 74". In dem Maße, in dem die Massen des Messstiftes 45 in z-Richtung bewegt werden, wird das Gegengewicht 74 gegenläufig bewegt. Die Masse des Gehäuses 50 spielt dabei keine Rolle, da sie nicht in z-Richtung ausgelenkt wird.

Fig. 2D zeigt zur Erläuterung eine Alternative, in der gleiche Bezugszeichen wie in den Fig. 2A bis 2C verwendet wurden, zu denen jeweils ein "a" hinzugefügt wurde. Fig. 2D erläutert eine mögliche andere Positionierung der Federn 64a, 66a, dort nämlich zwischen dem kardanischen Lager 58a und der Gehäusewand, während sich beim Ausführungsbeispiel gemäß Fig. 2A bis 2C die Federn 64, 66 zwischen dem freien Ende des Messstiftes 45 und dem kardanischen Lager 58 befanden.

Die zuletzt genannte Positionierung hat den Vorteil, dass die in z-Richtung zu bewegenden Massen minimal sind, nämlich unterhalb des kardanischen Lagers 58 nur die Masse des Messstiftes 45 umfassen.

Demgegenüber muss bei der alternativ möglichen Anordnung gemäß Fig. 2D noch das kardanische Lager 58a selbst mitbewegt werden. Die Lösung gemäß Fig. 2D bietet sich daher nur dann an, wenn bestimmte bauliche Gründe eine Verlagerung der Federn von der Position 64, 66 in Fig. 2A bis 2C in die Position 64a, 66a in Fig. 2D ratsam erscheinen lassen.

Fig. 2E zeigt noch ein weiteres Detailproblem, nämlich das der sogenannten "Tarierablage". Auch in Fig. 2E sind gleiche Elemente mit gleichen Bezugszeichen wie in Fig. 2A bis 2C versehen, jedoch ebenfalls unter Hinzufügung eines "a".

Fig. 2E illustriert die Verhältnisse im Bereich der Hebelarme 72, 76, die im Prinzip einen starren Biegebalken darstellen, der mittig im Bereich der Stützen 68 bzw. des Gelenks 70 gelagert ist. Durch das Gegengewicht 74a wird dieser Biegebalken 72a, 76a verbogen, wie in Fig. 2E stark übertrieben dargestellt ist. Dies führt zu einer Tarierablage TA in der Form, dass der Messstift 45 um den Betrag TA zu niedrig (in z-Richtung) liegt.

Um dem vorzubeugen, wird das Gegengewicht 74a daher erfindungsgemäß mit einem kleinen Zusatzgewicht 75 versehen, das die Anordnung gemäß Fig. 2E im Gegenuhrzeigersinn um das Gelenk 70 verdreht, so dass der Messstift 45a gerade wieder um die Tarifablage TA angehoben wird.

Aus den Fig. 3 und 4 wird eine bevorzugte Ausführungsform dieser Tariervorrichtung deutlich.

Danach gehen vom oberen Ende des Messstiftes 45 drei um 120° gegeneinander versetzte radiale Arme aus, die als beidendig mit Blattfedern eingespannten Platten 72, 76 ausgebildet sind. Das äußere Ende der Platten ist über eine Blattfeder am Gegengewicht 74 befestigt. Etwa auf halber Länge der Platten befindet sich das ebenfalls als dünne Blattfeder ausgebildete Gelenk 70, das zu den Stützen 68 führt. Diese sind als Ringsegmente ausgebildet.

Die Verwendung von Blattfedern als Einspannung für die Hebel 72 und 76 stellt eine elegante Realisierung der elastischen Bereiche 73 und 78 dar, weil sich die Blattfedern bei einer Auslenkung gemäß Fig. 2C insgesamt S-förmig verbiegen können, also an ihren beiden Enden in unterschiedlicher vertikaler Position horizontal verlaufen.

Die Verhältnisse im Bereich der Hebel 72, 76 (ohne Berücksichtigung der Eigendurchbiegung gemäß Fig. 2E) sind äußerst schematisch in Fig. 4B und 4C dargestellt.

Man erkennt, dass im Verhältnis zu den elastischen Bereichen 73 und 78 die Form der starren Hebel 72 und 76 unverändert bleibt, wenn diese starren Hebel um das Lager 70 verschwenkt werden. Demgegenüber nehmen die elastischen Bereiche 73 und 78 insgesamt eine S-förmige Gestalt an.

Diese Maßnahmen haben den Vorteil, dass außer der inneren Reibung beim Durchbiegen der elastischen Bereiche 73 und 78 keine Reibung, insbesondere keine Gleitreibung auftritt und damit auch keine im vorliegenden Zusammenhang schädliche Hysterese.

Bevorzugt ist die Ausführungsform gemäß Fig. 4 dabei so dimensioniert, dass die als Waagebalken wirkenden doppelarmigen Hebel 72, 76 auf beiden Seiten eine gleiche Hebellänge haben. Auf diese Weise kann die Tariermasse des Gegengewichts 74 gerade so groß gewählt werden wie die Masse der Tastkopfkinematik, d.h. der in z-Richtung beweglichen Teile des Tastkopfes 40.

Die Eigenschaften dieser Tariervorrichtung bleiben auch bei einem Verschwenken des Tastkopfes 40 im Raum erhalten, sind also nicht nur in vertikaler Betriebslage wirksam.

Insgesamt stellt die vorliegende Erfindung damit einen Tastkopf zur Verfügung, der in seiner Einbaulage geschwenkt werden kann, ohne dass damit die stabile Stellung der tastenden Elemente aufgehoben wird. Die bei herkömmlichen Tastköpfen auftretende Reduzierung des Messbereichs als Folge von Lagefehlern durch Verschwenken des Tastkopfes wird erfindungsgemäß durch die geschilderte passive Tarierung vermieden oder zumindest auf ein Minimum reduziert. Diese passive Tarierung ist unabhängig von der Steuerung und benötigt keine zusätzlichen Signalleitungen im Mehrkoordinaten-Messgerät. Der gewählte kinematische Aufbau ermöglicht ferner eine Anordnung mit geringem Eigengewicht, da das als Tariermasse wirkende Gegengewicht 74 auch für eine Tarierung in der Kardanebene x=y genutzt werden kann (vgl. m₂/m₁ in Fig. 1).

## Patentansprüche

1. Tastkopf für ein Mehrkoordinaten-Messgerät mit einem im Raum auslenkbaren Messtaster (14; 44), der zur Auslenkung entlang von zwei (x, y) von drei Achsen (x, y, z) kardanisch gelagert ist, wobei ferner eine Feder (24; 64, 66) für eine Auslenkung entlang der dritten Achse (z) vorgesehen ist, und mit als Massen (21, 23, 36; 74) ausgebildeten Tariermitteln, die den Messtaster (14; 44) bei unterschiedlicher Ausrichtung des Tastkopfes (10; 40) im Raum in einer vorbestimmten Ruhelage halten, **dadurch gekennzeichnet, dass** die Tariermittel ein Gegengewicht (36; 74) aufweisen; das sich zwangsweise gegenläufig zu den durch die Feder (24; 64, 66) abgestützten Massen (21, 23) bewegt.

2. Tastkopf nach Anspruch 1, **dadurch gekennzeichnet, dass** die Tarierung ferner durch eine vorbestimmte räumliche Verteilung der Massen (21, 23, 36) bewirkt wird.

3. Tastkopf nach Anspruch 1 oder 2, **dadurch gekennzeichnet, dass** der Messtaster (14; 44) in seinem Massenschwerpunkt kardanisch gelagert (18; 58) ist.

4. Tastkopf nach einem oder mehreren der Ansprüche 1 bis 3, **dadurch gekennzeichnet, dass** der Messtaster (44) ein Gehäuse (50) aufweist, dass in dem Gehäuse (50) ein in einer Spitze (46) auslaufender Messstift (45) angeordnet ist, dass der Messstift (45) gegenüber dem Gehäuse (50) über die Feder (64, 66) abgestützt ist, und dass das Gehäuse (50) kardanisch gelagert (58) ist.

5. Tastkopf nach einem der Ansprüche 1 bis 4, **dadurch gekennzeichnet, dass** die Feder als Membranfeder (64, 66) ausgebildet ist.

6. Tastkopf nach Anspruch 5, **dadurch gekennzeichnet, dass** die Membranfeder (64, 66) in einem vorzugsweise topfartigen Abschnitt (54) eines Gehäuses (50) des Messtasters (44) zwischen dem Gehäuse (50) und einem in einer Ruhestellung sich entlang einer Gehäuseachse (51) erstreckenden Messstift (45) angeordnet ist.

7. Tastkopf nach Anspruch 5 oder 6, **dadurch gekennzeichnet, dass** zwei Membranfedern (64,'66) im axialen (z) Abstand zueinander vorgesehen sind.

8. Tastkopf nach einem oder mehreren der Ansprüche 4 bis 7, **dadurch gekennzeichnet, dass** die Feder (64, 66) zwischen der Spitze (46) und der kardanischen Aufhängung (18; 58) angeordnet ist.

9. Tastkopf nach einem der Ansprüche 1 bis 8 **dadurch gekennzeichnet, dass** die Tariermittel einen Hebelmechanismus (32 - 34; 68 - 73, 76, 78) zum gegenläufigen Bewegen der Massen (21, 23, 36; 74) umfasst.

10. Tastkopf nach Anspruch 9, **dadurch gekennzeichnet, dass** der Hebelmechanismus (32 - 34; 68 - 73, 76, 78) zweiarmige Hebel (33; 72, 76) umfasst.

11. Tastkopf nach Anspruch 10, **dadurch gekennzeichnet, dass** mindestens einer der Hebel (72, 76) einen elastischen Bereich (73, 78) aufweist.

12. Tastkopf nach Anspruch 10 oder 11, **dadurch gekennzeichnet, dass** die Hebel (72, 76) als mittig aufliegende starre Gebilde mit beidendig biegeelastischer Einspannung (78) ausgebildet sind.

13. Tastkopf nach einem oder mehreren der Ansprüche 9 bis 12, **dadurch gekennzeichnet, dass** der Hebelmechanismus (68 - 73, 76, 78) zwischen einem äußeren Gegengewicht (74) und einem in einer Ruhestellung sich entlang einer Mittelachse (51) des Messtasters (44) erstreckenden Messstift (45) angeordnet ist.

14. Tastkopf nach Anspruch 13, **dadurch gekennzeichnet, dass** der Messtaster (44) ein rohrartiges Gehäuse (50) aufweist, dass das Gehäuse (50) an seiner Oberseite mit einem radialen Flansch (56) versehen ist, dass zweiarmige Hebel (72, 76) des Hebelmechanismus (68 - 73, 76, 78) sich mittig an dem Flansch (56) abstützen (68).

15. Tastkopf nach einem oder mehreren der Ansprüche 9 bis 14, **dadurch gekennzeichnet, dass** eine mittels des Hebelmechanismus (32 - 34; 68 - 73, 76, 78) verschwenkte Masse (74a) mit einem Zusatzgewicht (75) versehen ist, wobei das Zusatzgewicht (75) so dimensioniert ist, dass eine infolge des Gewichtes der Masse (74a) auftretende Durchbiegung eines diese Masse (74a) tragenden Hebelarms und/öder einer den Hebelarm tragenden Lagerstelle kompensiert wird.

## Claims

1. A probe head for a multicoordinate measuring machine having a spatially deflectable measuring feeler (14; 44) that is cardanically mounted for deflection along two (x, y) of three axes (x, y, z), wherein a spring (24; 64, 66) is further provided for deflection along the third axis (z), and having balancing means that are designed as masses (21, 23, 36; 74) and hold the measuring feeler (14; 44) in a predetermined rest position for different alignments of the probe head (10; 40) in space, **characterized in that** the balancing means have a counterweight (36; 74) that moves in a fashion that is forcibly oppositely directed to the masses (21, 23) supported by the spring (24; 64, 66).

2. The probe head of claim 1, **characterized in that** the balancing is furthermore effected by a predetermined spatial distribution of the masses (21, 23, 36).

3. The probe head of claim 1 or 2, **characterized in that** the measuring feeler (14; 44) is cardanically mounted (18; 58) at its centroid.

4. The probe head of one or more of claims 1 to 3, **characterized in that** the measuring feeler (44) has a housing (50), **in that** a measuring stylus (45) extending to a tip (46) is arranged in the housing (50), **in that** the measuring stylus (45) is supported relative to the housing (50) via the spring (64, 66), and **in that** the housing (50) is cardanically mounted (58).

5. The probe head of one of claims 1 to 4, **characterized in that** the spring is designed as a membrane spring (64, 66).

6. The probe head of claim 5, **characterized in that** the membrane spring (64, 66) is arranged in a preferably pot-like portion (54) of a housing (50) of the measuring feeler (44) between the housing (50) and a measuring stylus (45) extending in a rest position along a housing axis (51).

7. The probe head of claim 5 or 6, **characterized in that** two membrane springs (64, 66) are provided at an axial (z) spacing from one another.

8. The probe head of one or more of claims 4 to 7, **characterized in that** the spring (64, 66) is arranged between the tip (46) and the cardanic suspension (18; 58).

9. The probe head of one of claims 1 to 8, **characterized in that** the balancing means comprise a lever mechanism (32 - 34; 68 - 73, 76, 78) for moving the masses (21, 23, 36; 74) in opposite directions.

10. The probe head of claim 9, **characterized in that** the lever mechanism (32 - 34; 68 - 73, 76, 78) comprises double-armed levers (33; 72, 76).

11. The probe head of claim 10, **characterized in that** at least one of the levers (72, 76) has an elastic region (73, 78).

12. The probe head of claim 10 or 11, **characterized in that** the levers (72, 76) are designed as centrally supported rigid structures with a flexurally elastic clamping means (78) at both ends.

13. The probe head of one or more of claims 9 to 12, **characterized in that** the lever mechanism (68 - 73, 76, 78) is arranged between an outer counterweight (74) and a measuring stylus (45) extending in a rest position along a central axis (51) of the measuring feeler (44).

14. The probe head of claim 13, **characterized in that** the measuring feeler (44) has a tubular housing (50), **in that** the housing (50) is provided on its top side with a radial flange (56), and **in that** double-armed levers (72, 76) of the lever mechanism (68 - 73, 76, 78) are centrally supported on the flange (56).

15. The probe head of one or more of claims 9 to 14, **characterized in that** a mass (74a) which is pivoted by means of the lever mechanism (32 - 34; 68 - 73, 76, 78) is provided with an additional weight (75), the additional weight (75) being dimensioned such that a flexure, occurring as a consequence of the weight of the mass (74a), of a lever arm carrying this mass (74a) and/or of a bearing point carrying the lever arm is compensated.

## Revendications

1. Sonde pour un appareil de mesure à plusieurs coordonnées, comportant un palpeur de mesure (14; 44), qui peut être déplacé dans l'espace et qui est monté sur une suspension à la Cardan pour un déplacement le long de deux axes (x, y) parmi trois axes (x, y, z), un ressort (24 ; 64, 66) étant prévu en outre pour un déplacement le long du troisième axe (z), et comportant des moyens de tarage conçus sous forme de masses (21, 23, 36 ; 74), par lesquelles le palpeur de mesure (14 ; 44) est maintenu dans une position de repos prédéfinie en présence de diverses orientations dans l'espace de la sonde (10 ; 40), **caractérisée en ce que** les moyens de tarage comportent un contrepoids (36 ; 74), qui se déplace obligatoirement dans le sens contraire des masses (21, 23) supportées par le ressort (24 ; 64, 66).

2. Sonde selon la revendication 1, **caractérisée en ce que** le tarage est effectué en outre par une répartition définie dans l'espace des masses (21, 23, 36).

3. Sonde selon la revendication 1 ou 2, **caractérisée en ce que** le palpeur de mesure (14; 44) est monté sur une suspension à la Cardan (18 ; 58) dans son centre de gravité.

4. Sonde selon l'une quelconque des revendications 1 à 3, **caractérisée en ce que** le palpeur de mesure (44) comporte un boîtier (50), **en ce qu'**une tige de mesure (45) se terminant par une pointe (46) est agencée dans le boîtier (50), **en ce que** la tige de mesure (45) est supportée par le ressort (64, 66) par rapport au boîtier (50), et **en ce que** le boîtier (50) est monté sur une suspension à la Cardan (58).

5. Sonde selon l'une quelconque des revendications 1 à 4, **caractérisée en ce que** le ressort est conçu sous forme de ressort à diaphragme (64, 66).

6. Sonde selon la revendication 5, **caractérisée en ce que** le ressort à diaphragme (64, 66) est agencé dans une zone (54), de préférence en forme de godet, d'un boîtier (50) du palpeur de mesure (44) entre le boîtier (50) et une tige de mesure (45) qui, dans une position de repos, s'étend le long d'un axe de boîtier (51).

7. Sonde selon la revendication 5 ou 6, **caractérisée en ce que** deux ressorts à diaphragme (64, 66) sont prévus à distance axiale (z) l'un de l'autre.

8. Sonde selon l'une quelconque des revendications 4 à 7, **caractérisée en ce que** le ressort (64, 66) est agencé entre la pointe (46) et la suspension à la Cardan (18 ; 58).

9. Sonde selon l'une quelconque des revendications 1 à 8, **caractérisée en ce que** les moyens de tarage comportent un mécanisme à levier (32-34 ; 68-73, 76, 78) pour le mouvement en sens opposé des masses (21, 23, 36 ; 74).

10. Sonde selon la revendication 9, **caractérisée en ce que** le mécanisme à levier (32-34 ; 68-73, 76, 78) comporte des leviers (33 ; 72, 76) à deux bras.

11. Sonde selon la revendication 10, **caractérisée en ce qu'**au moins un des leviers (72, 76) comporte une zone élastique (73, 78).

12. Sonde selon la revendication 10 ou 11, **caractérisée en ce que** les leviers (72, 76) sont réalisés sous forme de structure rigide, en appui au milieu, avec une fixation (78) élastique en flexion aux deux extrémités.

13. Sonde selon l'une quelconque des revendications 9 à 12, **caractérisée en ce que** le mécanisme à levier (68-73, 76, 78) est agencé entre un contrepoids extérieur (74) et une tige de mesure (45) qui, dans une position de repos, s'étend le long d'un axe médian (51) du palpeur de mesure (44).

14. Sonde selon la revendication 13, **caractérisée en ce que** le palpeur de mesure (44) comporte un boîtier (50) tubulaire, **en ce que** le boîtier (50) est muni d'une collerette radiale (56) sur sa face supérieure, **en ce que** des leviers (72, 76) à deux bras du mécanisme à levier (68-73, 76, 78) prennent appui (68) au milieu sur la collerette (56).

15. Sonde selon l'une quelconque des revendications 9 à 14, **caractérisée en ce qu'**une masse (74a), basculée au moyen du mécanisme de levier (32-34 ; 68-73, 76, 78), est munie d'une masse supplémentaire (75), ladite masse supplémentaire (75) étant dimensionnée de manière à compenser une flexion, due au poids de la masse (74a), de l'un des bras de levier portant cette masse (74a) et/ou d'un point d'appui portant le bras de levier.
